(19) Europäisches Patentamt
European Patent Office
Office européen des brevets

(11) **EP 3 640 168 A1**

(12) **EUROPÄISCHE PATENTANMELDUNG**

(43) Veröffentlichungstag:
**22.04.2020 Patentblatt 2020/17**

(51) Int Cl.:
**B65G 65/00** (2006.01)  **B65G 43/08** (2006.01)

(21) Anmeldenummer: **18201084.3**

(22) Anmeldetag: **17.10.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder: **Aschpurwis, Carsten
78464 Konstanz (DE)**

(54) **VERFAHREN UND SYSTEM ZUM BELADEN EINES FAHRERLOSEN TRANSPORTFAHRZEUGES TRANSPORTFAHRBAHN**

(57) Fahrerlose Transportfahrzeuge FTF haben auch bei der Stückgutsortierung eine zunehmende Bedeutung. Es wird ein Verfahren zum Beladen eines fahrerlosen Transportfahrzeuges (10) mit einem Stückgut (20) in einer Übergabestelle (48), vorgeschlagen, wo FTF mit einem bekannten Zuführsystem (30) während der Fahrt des FTF mit einem Stückgut beladen werden. Um ein herunterfallen von Stückgütern beim Beladen zu vermeiden, stellt eine übergeordnete Steuerung die Zuführgeschwindigkeit ($V_i$) des Stückgutes (20) und die Fahrgeschwindigkeit ($V_d$) vor Übergabe des Stückgutes (20) auf das Transportfahrzeug (10) so ein, dass die Zuführgeschwindigkeitskomponente ($V_{id}$) der Transportrichtung (d) gleich ist wie die Fahrgeschwindigkeit ($V_d$) des Transportfahrzeuges (10). Dadurch können bestehende Zuführsysteme (30) wie sie unter dem Begriff HSI (High speed Induction) bekannt sind weiterhin verwendet werden.

FIG 2

EP 3 640 168 A1

**Beschreibung**

Die vorliegende Erfindung bezieht sich auf ein Verfahren zum Beladen eines fahrerlosen Transportfahrzeuges mit einem Stückgut gemäss dem Patentanspruch 1 sowie ein System zum Beladen eines fahrerlosen Transportfahrzeuges mit einem Stückgut gemäss dem Patentanspruch 8.

Der Erfindung liegt das Gebiet Sortiersysteme zugrunde. Sortiersysteme identifizieren in ungeordneter Reihenfolge ankommendes, heterogen geformtes und vereinzeltes Stückgut, beispielsweise Pakete (in Postämtern), Gepäckstücke (in Flughafenterminals) oder Kommissionsware (in Versandhäusern), aufgrund vorgegebener Unterscheidungskriterien und verteilen sie auf festgelegte Ziele. Solche Sortiersysteme bestehen aus Sortieranlagen, die mit entsprechenden organisatorischen Abläufen und angepassten Betriebsstrategien, welche in zugehörigen Steuerungen bei den Sortieranlagen bzw. Sortiersystemen implementiert sind, die Systemfunktionalität der Sortiersysteme gewährleisten.

Die Sortieranlage stellt dabei den technischen Teil des Sortiersystems dar und besteht aus einem oder mehreren Sortern, welcher bzw. welche die Verteilung des Stückgutes auf die Ziele realisiert bzw. realisieren, sowie vor- und nachgeschalteten Funktionsbereichen, wie Zu- und Abförderungen des Stückgutes.

Ein solcher Sorter selbst besteht aus einer Einschleusung, einem Verteilförderer und End-/Zielstellen für das zu verteilende Stückgut. Sorter erreichen je nach Stückgutgewicht Sortierleistungen von Stückgut bis über 15.000 Stück/h. Übliche Maximalgewichte von Stückgut liegen bei ca. 20kg bis 60kg, bei einzelnen Sortiersystemen auch bis zu 150kg.

Bei technikorientierter Klassifizierung von Verteilförderern nach den Kriterien Belegungsart, Wirkprinzip einer Ausschleusung des Stückgutes und fördertechnisches Prinzip werden insbesondere Verteilförderer mit einer Quergurt- bzw. Querbandtechnologie oder einer Kippschalentechnologie
unterschieden. Diese werden kurz als Quergurtförderer / Querbandsorter oder Kippschalensorter bezeichnet.

Ein Quergurtförderer bzw. Querbandsortierer ist aus der Quelle [4] bekannt.

In der Patentschrift [5] ist ein Förder-/Sortiersystem offenbart, das eine Vorrichtung zur Zuförderung (in englischer Sprache: «induction») eines Produkts zu einem Sortierer enthält, wobei der Sortierer durchgehende Förderglieder enthält, so dass mehrere Sortierziele zur Aufnahme von dem durchgehenden Förderglied entladenen Produkten angesteuert werden können. Diese Offenbarung findet sowohl auf Linearsortierer, wie zum Beispiel Sortierer mit Zwangsverschiebung, als auch Karussellsortierer, wie zum Beispiel Kippschalen- und Querbandsortierer, Anwendung.

Anstelle von in einer geschlossenen Kette verbundenen Transportelementen bzw. Fördergliedern werden zunehmend fahrerlose autonome Transportfahrzeuge eingesetzt wie sie als FTF, AGV oder als «mobile robots» bekannt sind:

FTF
Fahrerlose Transportfahrzeuge, → Quelle [2];

AGV
Automated_guided_vehicle, → Quelle [1];

mobile robots → Quelle [3].

Die vorgenannten Vehikel werden im Folgenden summarisch mit dem Begriff «fahrerloses Transportfahrzeuge FTF» oder kurz mit «FTF» bezeichnet.
Diese fahrerlosen Transportfahrzeuge erreichen im vorgenannten Einsatzgebiet Geschwindigkeiten bis etwa 3m/s. Unter besonderen Bedingungen sind für diese FTF auch höhere Geschwindigkeiten vorgesehen. Die Streckenführung erfolgt raumgängig, zumeist horizontal.

Diese fahrerlosen Transportfahrzeuge ermöglichen im Gegensatz zu den Linear- oder Karussellförderern ein direktes Anfahren einer Vielzahl von Sortierzielen in einem weit größeren Aktionsbereich. Somit werden Zwischensortierungen vermieden.

Es ist jedoch wünschenswert, die bekannten Hochleistungszuförderungssysteme, auch auf das Beladen von fahrerlosen Transportfahrzeugen anzuwenden. In der Fachsprache sind diese Hochleistungszuförderungen/Hochleistungszuförderungssysteme unter dem Begriff «high speed induction HSI» oder «high rate induction» (siehe Dokument [5']) bekannt.

Die übliche Vorgehensweise zum Beladen eines fahrerlosen Transportfahrzeuge FTF mit den Schritten

- Anhalten des FTF an einer Übergabestelle,
- Aufladen des Stückgutes auf das FTF, ggf mit Greifarmen des FTF;
- Anfahren des FTF und Fahrt zu einer Zielstelle;

führt zu einer erheblichen Einschränkung des Durchsatzes von zu fördernden Stückgütern und ist außerdem energieintensiv, da das Abbremsen auf null und das Wiederanfahren die Autonomie der FTF erheblich beschränkt. Autonomie bedeutet in diesem Zusammenhang die Betriebsdauer eines FTF zwischen zwei Batterieladungszyklen.

Der vorliegenden Erfindung liegt daher die Aufgabe zugrunde ein Verfahren für das Beladen von fahrerlosen Transportfahrzeugen mit einem Stückgut anzugeben, bei dem:

- Bestehende Zuförderungssysteme können möglichst beibehalten werden;
- der Durchsatz bestehender Zuförderungssysteme erfährt keine Beschränkung;
- die Autonomie der eingesetzten fahrerlosen Transportfahrzeuge möglichst unbeeinflusst werden.
  Ebenso soll ein System zur Durchführung des vorgenannten Verfahrens angegeben werden.

Diese Aufgabe wird durch die in den unabhängigen Patentansprüchen angegebenen Maßnahmen gelöst. Vorteilhafte Ausgestaltungen der Erfindung sind in weiteren Ansprüchen angegeben.

Das erfindungsgemäße Verfahren zum Beladen eines fahrerlosen Transportfahrzeuges mit einem Stückgut in einer Übergabestelle beruht darauf, dass sich das Stückgut mit einer Zuführgeschwindigkeit auf einem Zuführsystem unter einem vorgegebenen spitzen Winkel der Transportrichtung des sich mit einer Fahrgeschwindigkeit bewegenden Transportfahrzeuges nähert.

Das erfindungsgemäße Verfahren ist durch die folgenden Verfahrensschritte gekennzeichnet:

i) eine übergeordnete Steuerung stellt die Zuführgeschwindigkeit ($V_i$) des Stückgutes (20) und die Fahrgeschwindigkeit ($V_d$) vor Übergabe des Stückgutes auf das Transportfahrzeug (10) so ein, dass die Zuführgeschwindigkeitskomponente ($V_{id}$) der Transportrichtung (d) im Bereich der Übergabestelle (48) gleich ist wie die Fahrgeschwindigkeit ($V_d$) des Transportfahrzeuges (10) und

ii) das Stückgut (20) wird in der Übergabestelle (48) vom Zuführsystem (30) auf das Transportfahrzeug (10) übergeben.

Aus diesem erfindungsgemäßen Verfahren können sich die nachfolgend erläuterten Vorteile zusätzlich ergeben.

a) Das Verfahren ist unabhängig vom Träger auf dem fahrerlosen Transportfahrzeug. Als Träger kann alternativ vorgesehen werden:

Oberfläche,
Kippschale,
Querband.

b) Gemäß dem erfindungsgemäßen Verfahren verbleibt eine von Null verschiedene Geschwindigkeitskomponente orthogonal zur Fahrrichtung. Da der Winkel zwischen Transportrichtung des Transportfahrzeug und der Zuförderrichtung im Bereich der Übergabestelle ein spitzer Winkel ist, ist diese Geschwindigkeitskomponente nur etwa die Hälfte der Fahrgeschwindigkeit wegen

$$\sin 30° = 0.5,$$

wenn als spitzer Winkel der Wert von beispielsweise höchstens 30° gewählt wird.

c) Die übergeordnete Steuerung stellt sicher, dass der Durchsatz der zuzuführenden Stückgüter im regulären Betrieb in etwa gleich bleibt wie beim Einsatz eines bekannten Zirkulations- oder Linearförderers, da die fahrerlosen Fahrzeuge hinsichtlich ihrer Fahrgeschwindigkeit entsprechend dimensioniert werden können.

d) Aus dem Vergleich mit dem Stand der Technik für Linearförderer oder für Karussellförderer/Zirkularförderer ergibt sich unmittelbar, dass der Platzbedarf für die Zuführung von Stückgütern insgesamt deutlich geringer ist. Da ein FTF wirklich beliebige Ziele in einer Anlage anfahren können, ergibt sich dadurch auch der Vorteil, dass ein Stückgut genau einmal einen Sortiergang/Ladegang durchfährt. Wiederholungen/Wiedereinschleusungen für den Sortierprozess sind nicht erforderlich. Eine Wiedereinschleusung ist insbesondere bei Linearförderern/Linerarsortern Teil eines üblichen Prozess-Schrittes.

e) Für das Beladen eines FTF sind keine komplexen und aufwendigen Greifsysteme erforderlich. Dadurch kann auch die Dauer des Aufladens auf ein FTF deutlich verringert werden, so dass eine zweifache Ersparnis erzielt werden kann.

Wie vorstehend erwähnt verbleibt gemäß dem erfindungsgemäßen Verfahren eine von null verschiedene Geschwindigkeitskomponente orthogonal zur Fahrrichtung. Um einem Abgleiten des auf das FTF verfrachteten Stückgutes entgegen zu wirken, kann die Ladefläche so ausgestaltet sein, dass sie eine gute Gleitreibung zwischen Stückgut und Ladefläche aufweist.

Eine besondere Ausführungsform der vorliegenden Erfindung stellt ein fahrerloses Transportfahrzeug dar, das mit einer Kippschale ausgerüstet ist. Die Kippschale hat den besonderen Vorteil, dass die Stückgüter auch bei nicht sehr genauer Hinführung bzw. nicht sehr genauem Abwurf innerhalb der Übergabestelle dadurch trotzdem vom FTF aufgenommen werden. Bei sehr hohen Geschwindigkeiten kann für die Kippschale zusätzlich eine Neigung der Kippschale mit einem Neigungswinkel von wenigen Grad vorgesehen werden, so dass durch die Neigung der Kippschale einem Überschießen des Stückgutes präventiv entgegen gewirkt werden kann.

In weiteren Ausführungsformen der vorliegenden Erfindung kann zusätzlich eine Kompensation der Geschwindigkeitskomponente orthogonal zur Fahrrichtung des FTF vorgesehen werden:

i) Unmittelbar nach der Übergabe macht das FTF quasi-instantan eine Kurve, so dass die weitere Fahrtrichtung ungefähr der Zuförderrichtung entspricht.

ii) Das fahrerloses Transportfahrzeug ist mit einem Quergutförderband versehen, also einem Förderband orthogonal zur Fahrrichtung im Bereich der Übergabestell. Für eine Kompensation der Geschwindigkeitskomponente orthogonal zur Fahrrichtung des FTF kann nun zusätzlich vorgesehen werden, dass die übergeordnete Steuerung die Zuführgeschwindigkeit des Stückgutes vor Übergabe des Stückgutes auf das Transportfahrzeug so einstellt, dass die Zuführgeschwindigkeitskomponente in Förderrichtung des Quergurtförderbandes im Bereich der Übergabestelle gleich ist wie die Geschwindigkeit des Quergurtförderbandes. Auf diese Weise ist ein Abrutschen oder Weggleiten des Stückgutes vom FTF im Bereich der Übergabestelle ausgeschlossen.

Die Erfindung wird nachfolgend anhand der Zeichnung beispielsweise näher erläutert. Dabei zeigen:

Figur 1 Darstellung eines Speisungssystems mit Zuförderungseinheiten und einer Rezirkulationsbahn gemäss dem Stand der Technik;

Figur 2 Darstellung der Übergabe eines Stückgutes vom Zuförderungssystem zu einem fahrlosen Transportfahrzeuges.

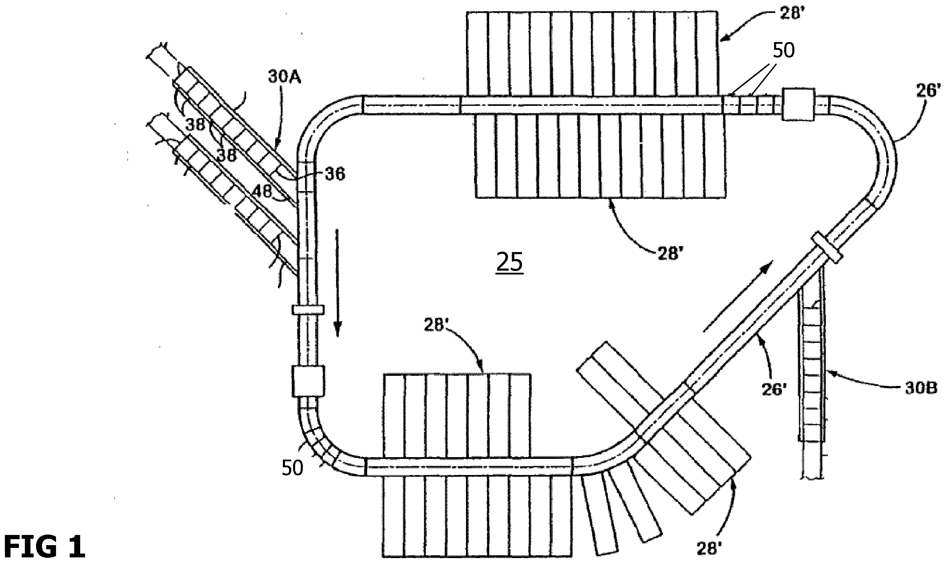

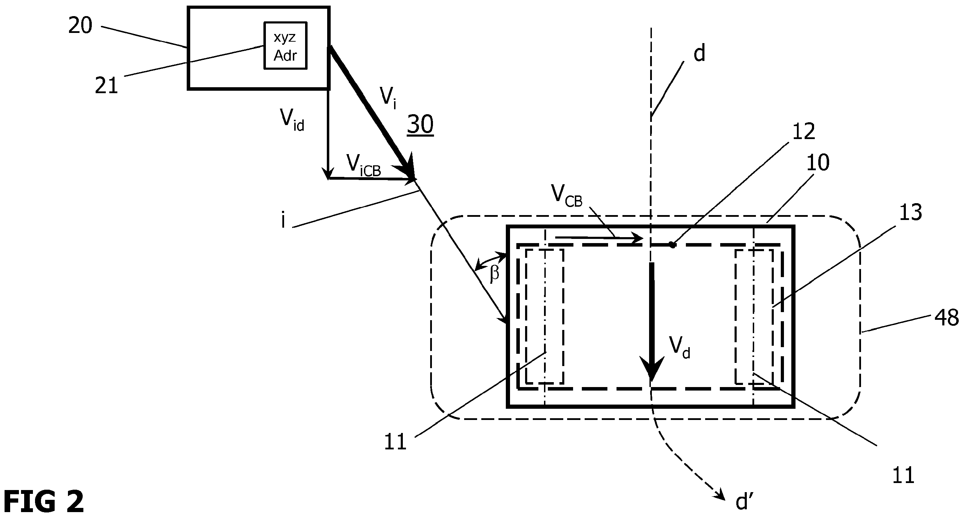

FIG 1 zeigt ein Speisungssystem mit Zuförderungseinheiten und einer Rezirkulationsbahn je gemäss den Figuren 2 in den Patentschriften [5] bzw. [5']; die Patentschrift 5] ist eine Übersetzung der Patentschrift [5']. Einzelne Bezugszeichen wurden entfernt. Komponenten in diesen Figuren 2 der Patentschriften [5] und [5'] die auch in einer Ausführungsform der vorliegenden Erfindung vorhanden sind, werden daher je mit den gleichen Bezugszeichen versehen. FIG 1 zeigt einen Karussellförderer 25 (auch Zirkularförderer genannt), bei dem eine doppelte Zuförderungseinheit 30A und eine einfache Zuförderungseinheit 30B vorgesehen sind, um den Karussellförderer 25 enthaltend eine Mehrzahl von Trägern 50 mit zu sortierendem Stückgut 20 (nicht gezeigt in FIG 1) beschickt wird. Mit dem Bezugszeichen 48 ist eine Überführung von einer Zuförderungseinheit 30 auf die Träger 50 bezeichnet. Solche Zuführungseinheiten 30 werden auch den Ausführungsformen der vorliegenden Erfindung zugrunde gelegt.

FIG 2 zeigt eine Grundrissdarstellung einer Übergabestelle 48 für die Übergabe eines Stückgutes 20 auf ein fahrerloses Transportfahrzeuges FTF 10. Der FIG 2 ist in dieser Ausführungsform der Erfindung ein FTF 10 zugrunde gelegt, das ein Quergurtförderband 12 aufweist, das über Stützrollen/Antriebsrollen 13 angetrieben wird. Die Stützrollen/Antriebsrollen weisen je eine Achse 11 auf. Die Darstellung in FIG 2 ist eine Momentaufnahme vor der Übergabe des Stückgutes 20 auf das FTF 10. Ganz genau genommen, müsste sich das Stückgut 20 unmittelbar beim FTF 10 dargestellt sein. Aus Gründen der Übersichtlichkeit ist dies nicht so dargestellt sondern weiter oben in der FIG 2.

In einer anderen Ausführungsform der vorliegenden Erfindung kann das FTF 10 auch mit einer Kippschale versehen sein, nämlich analog den vorstehend genannten Kippschalensortierern.

Rein beispielhaft ist in FIG 2 eine auf einem Stückgut 20 angebrachte Identifikation/Adresse 21 gezeigt. Die Stückgüter 20 werden wie im Stand der Technik auf einem Zuführsystem der Übergabestelle 48 in der Zuführrichtung i mit einer Geschwindigkeit $V_i$ zugeführt. Das FTF 10 nähert sich der Übergabestelle 48 in der Transportrichtung d mit einer Geschwindigkeit $V_d$. Transportrichtung d und Zuführrichtung i sind in einem spitzen Winkel $\beta$ angeordnet. Dabei ist angenommen, dass die gezeichnete Seitenwand des FTF 10 parallel zur Transportrichtung d ist.

Der Übergabestelle 48 ist eine Steuerungs-/Regelungseinheit zur übergeordneten Steuerung von Zuführsystem 30 und einer Mehrzahl von fahrerlosen Transportfahrzeugen 10 zugrunde gelegt. Diese Steuerungs-/Regelungseinheit ist in FIG 2 nicht dargestellt und umfasst des Weiteren eine Vielzahl von Sensoren und Aktoren für die Zuführeinheit, die ebenfalls nicht gezeigt sind. Ebenso nicht dargestellt ist die auf jedem FTF befindliche Steuerung, die den Wegverlauf des FTF steuert einschliesslich der Sensorik zur Vermeidung von Kollision. Der Begriff «Übergabestelle» 48 bezeichnet hier einen funktionellen Ort und weder eine Vorrichtung des Zuführsystem 30 noch eine Vorrichtung am FTF 10.

Die vorgenannte Zuführgeschwindigkeit $V_i$ weist gemäss der Disposition in der FIG 2 mit der Fahrrichtung d des FTF die Geschwindigkeitskomponenten $V_{id}$, in Fahrrichtung d und $V_{iCB}$ orthogonal zur Fahrrichtung d auf.

Für die Übergabe/den Abwurf eines Stückgutes 20 wird von der übergeordneten Steuerung veranlasst, dass die Geschwindigkeitskomponente $V_{id}$ in Fahrrichtung d und die Fahrgeschwindigkeit $V_d$ des Fahrerlosen Transportfahrzeuges FTF zum Zeitpunkt der Übergabe gleich sind. Dadurch wird ein zuverlässiges und sicheres Platzieren des Stückgutes 20 auf dem FTF 10 ermöglicht.

Es verbleibt eine von Null verschiedene Geschwindigkeitskomponente $V_{iCB}$ orthogonal zur Fahrrichtung d. Für die gezeigte Ausführungsform der Erfindung gemäß der FIG 2 erfolgt eine Kompensation dieser Geschwindigkeitskomponente $V_{iCB}$ dadurch, in dem die übergeordnete Steuerung mittels entsprechender Sensorik an der Übergabestelle 48 veranlasst, das Quergurtförderband 12 so anzutreiben, dass dessen Geschwindigkeit $V_{CB}$ zum Zeitpunkt der Übergabe bzw. des Abwurfes gleich der Geschwindigkeitskomponente $V_{iCB}$ ist. Unmittelbar nach Aufsetzen des Stückgutes wird die diese Geschwindigkeit $V_{CB}$ auf null reduziert.

Der Winkel β zwischen der Fahrrichtung d des TFT und der und der Zuförderrichtung i ist vorzugsweise kleiner als 45°. Die Geschwindigkeitskomponenten $V_{id}$, $V_{iCB}$ in Transportrichtung bzw in Richtung des sich bewegenden Quergurtförderbandes sind wie folgt gegeben:

$$V_{id} = \sin \beta \cdot V_d \qquad V_{iCB} = \cos \beta \cdot V_d \ .$$

Typische Werte für den Winkel β genügen der Relation:

$$\beta \leq 30° .$$

Aus diesen Beziehungen kann nicht nur die Ausführbarkeit des Abbremsens mittels des Quergurtförderbandes 12 abgeleitet werden, sondern auch, dass beim Abbremsen keine so hohen Beschleunigungswerte auftreten, gemäß denen das Stückgut 20 vom Quergurtförderband 12 herunterfallen würde.

**Liste der Bezugszeichen, Glossar**

| | |
|---|---|
| 10 | Fahrerloses Transportfahrzeug FTF |
| 11 | Achse der Rolle für Quergurtförderband |
| 12 | Quergurtförderband |
| 13 | Stützrolle/Antriebsrolle Quergurtförderband |
| 20 | Stückgut |
| 21 | Identifikation eines Stückgutes, zB Adresse |
| 25 | Karussellförderer, Zirkularförderer |
| 26 | durchgehendes Glied |
| 28, 28' | Zielstellen; Sortierziele |
| 30, 30A, 30B | Zuförderungssystem, Zuförderungseinheit |
| 50 | Träger |
| i | Zuförderrichtung, «induction» |
| 36 | Endladeende |
| 38 | Fördereinheit des Zuförderungssystems 30 |
| 48 | Übergabestelle |
| 50 | Träger eines durchgehenden Gliedes 26 |
| β | Winkel zwischen Transportrichtung d des Transportfahrzeug und der Zuförderrichtung i |
| CB | Förderrichtung des Quergurtförderbandes auf dem FTF, crossbelt |
| d | Transportfahrbahn, Fahrroute des fahrerlosen Transportfahrzeuges FTF, Transportrichtung |
| FTF | Fahrerloses Transportfahrzeug |
| HSI | High Speed Induction |

FTS            Fahrerloses Transportsystem
$V_{CB}$         Geschwindigkeit des Quergurtförderbandes 12
$V_d$          Geschwindigkeit des Fahrerlosen Transportfahrzeuges FTF; Fahrgeschwindigkeit
$V_i$           Geschwindigkeit eines Stückgutes auf dem Zuförderungssystem; Zuführgeschwindigkeit
$V_{id}$, $V_{iCB}$     Geschwindigkeitskomponenten von $V_i$ in Transportrichtung bzw in Richtung des sich bewegenden Quergurtförderbandes

**Liste der zitierten Dokumente und Referenzen**

[1] AGV
https://en.wikipedia.org/wiki/Automated guided vehicle

[2] FTF
https://de.wikipedia.org/wiki/Fahrerloses Transportfahrzeug

[3] mobile robots
https://en.wikipedia.org/wiki/Mobile robot

[4] Quergurtsorter
https://de.wikipedia.org/wiki/Quergurtsorter

[5] DE 600 12 206 T2
SPEISUNGSSYSTEM MIT HOHER LEISTUNG
Siemens Aktiengesellschaft
de-Übersetzung der Patentschrift [5']

[5'] EP 1 224 038 81
HIGH RATE INDUCTION SYSTEM
Siemens Aktiengesellschaft

**Patentansprüche**

1. Verfahren zum Beladen eines fahrerlosen Transportfahrzeuges (10) mit einem Stückgut (20) in einer Übergabestelle (48), wobei sich das Stückgut (20) mit einer Zuführgeschwindigkeit ($V_i$) auf einem Zuführsystem (30) unter einem vorgegebenen spitzen Winkel ($\beta$) der Transportrichtung (d) des sich mit einer Fahrgeschwindigkeit ($V_d$) bewegenden Transportfahrzeuges (10) nähert,
   **gekennzeichnet durch** die Verfahrensschritte

   i) eine übergeordnete Steuerung stellt die Zuführgeschwindigkeit ($V_i$) des Stückgutes (20) und die Fahrgeschwindigkeit ($V_d$) vor Übergabe des Stückgutes auf das Transportfahrzeug (10) so ein, dass die Zuführgeschwindigkeitskomponente ($V_{id}$) der Transportrichtung (d) im Bereich der Übergabestelle (48) gleich ist wie die Fahrgeschwindigkeit ($V_d$) des Transportfahrzeuges (10);
   ii) das Stückgut (20) wird in der Übergabestelle (48) vom Zuführsystem (30) auf das Transportfahrzeug (10) übergeben.

2. Verfahren nach Anspruch 1,
   **dadurch gekennzeichnet, dass**
   das fahrerlose Transportfahrzeug (10) eine Kippschale aufweist, in die das Stückgut (20) übergeben wird.

3. Verfahren nach Anspruch 2,
   **dadurch gekennzeichnet, dass**
   die Kippschale vor der Ausführung des Verfahrensschrittes ii) geneigt wird, um einem Herausgleiten des Stückgutes (20) entgegen zu wirken.

4. Verfahren nach Anspruch 1,

**dadurch gekennzeichnet, dass**

unmittelbar nach Ausführung des Verfahrensschrittes i) die übergeordnete Steuerung veranlasst, dass das fahrerlose Transportfahrzeug (10) eine Kurve (d') fährt.

5.  Verfahren nach Anspruch 4,
    **dadurch gekennzeichnet, dass**
    die Kurve (d') in eine Fahrtrichtung (d') führt, die der Zuförderrichtung (i) entspricht.

6.  Verfahren nach Anspruch 1,
    **dadurch gekennzeichnet, dass**
    das fahrerlose Transportfahrzeug (10) ein Quergurtförderband (12) aufweist, dessen Förderrichtung (CB) orthogonal zur Fahrrichtung (d) des Transportfahrzeuges (10) ist und dass das Stückgut (20) auf das Quergutförderband (12) übergeben wird.

7.  Verfahren nach Anspruch 6,
    **dadurch gekennzeichnet, dass**
    im Verfahrensschritt i) die übergeordnete Steuerung die Zuführgeschwindigkeit ($V_i$) des Stückgutes (20) und die Fahrgeschwindigkeit ($V_d$) vor Übergabe des Stückgutes (20) auf das Transportfahrzeug (10) so einstellt, dass die Zuführgeschwindigkeitskomponente ($V_{icb}$) in Richtung (CB) des Quergurtförderbandes (12) im Bereich der Übergabestelle (48) gleich ist wie die Geschwindigkeit ($V_{CB}$) des Quergurtförderbandes (12).

8.  System zum Beladen von fahrerlosen Transportfahrzeuges (10) umfassend

    - wenigstens ein Zuführsystem (30) das einer Mehrzahl von fahrerlosen Transportfahrzeugen (10) Stückgüter zuführt und
    - Mittel zur Durchführung des Verfahrens nach einem der Ansprüche 1 bis 7.

FIG 1

EP 3 640 168 A1

FIG 2

Europäisches
Patentamt

European
Patent Office

Office européen
des brevets

## EUROPÄISCHER RECHERCHENBERICHT

Nummer der Anmeldung

EP 18 20 1084

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 107 697 533 A (BEIJING JINGDONG SHANGKE INFORMATION TECHNOLOGY CO LTD ET AL.) 16. Februar 2018 (2018-02-16) * Absatz [0106]; Anspruch 7; Abbildung 2 * ----- | 1,6-8 | INV. B65G65/00 B65G43/08 |
| X | US 9 452 893 B1 (FUJIHARA HIROAKI [JP] ET AL) 27. September 2016 (2016-09-27) * Spalte 21, Zeile 23 - Zeile 29 * * Spalte 10, Zeile 39 - Spalte 11, Zeile 2 * ----- | 1,4,6-8 | |
| X | WO 01/60674 A1 (FABRICOM [BE]; DAMME JEAN VAN [BE]) 23. August 2001 (2001-08-23) * Seite 23, Zeile 11 - Zeile 15; Abbildung 4 * * Seite 24, Zeile 17 - Zeile 20 * ----- | 1-3 | |
| A | WO 2015/002540 A1 (VANDERLANDE IND BV [NL]) 8. Januar 2015 (2015-01-08) * das ganze Dokument * ----- | 1,8 | |

**RECHERCHIERTE SACHGEBIETE (IPC)**

B65G

Der vorliegende Recherchenbericht wurde für alle Patentansprüche erstellt

| Recherchenort | Abschlußdatum der Recherche | Prüfer |
|---|---|---|
| Den Haag | 2. April 2019 | Schneider, Marc |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 20 1084

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-04-2019

| Im Recherchenbericht angeführtes Patentdokument | | Datum der Veröffentlichung | Mitglied(er) der Patentfamilie | | | Datum der Veröffentlichung |
|---|---|---|---|---|---|---|
| CN 107697533 | A | 16-02-2018 | KEINE | | | |
| US 9452893 | B1 | 27-09-2016 | CN | 106144554 | A | 23-11-2016 |
| | | | EP | 3093075 | A2 | 16-11-2016 |
| | | | JP | 2016210614 | A | 15-12-2016 |
| | | | US | 9452893 | B1 | 27-09-2016 |
| WO 0160674 | A1 | 23-08-2001 | AU | 3377301 | A | 27-08-2001 |
| | | | FR | 2804927 | A1 | 17-08-2001 |
| | | | WO | 0160674 | A1 | 23-08-2001 |
| WO 2015002540 | A1 | 08-01-2015 | EP | 3016834 | A1 | 11-05-2016 |
| | | | WO | 2015002540 | A1 | 08-01-2015 |

EPO FORM P0461

Für nähere Einzelheiten zu diesem Anhang : siehe Amtsblatt des Europäischen Patentamts, Nr.12/82

**EP 3 640 168 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 60012206 T2
- EP 122403881 A